# EUROPEAN PATENT APPLICATION

(11) **EP 0 614 062 A2**
(43) Date of publication of application: **07.09.1994**
(21) Application number: 94301172.6
(22) Date of filing: 18.02.1994
(51) Int. Cl.: F28F 3/14, B23K 26/00, B23K 15/00, B21D 53/04

(54) **Expanded structures**

(30) Priority: 04.03.1993 GB 9304449
(71) Applicant: IMI MARSTON LIMITED, Fordhouses Wolverhampton WV10 6QJ (GB); INCO ENGINEERED PRODUCTS LIMITED, Derby DE7 1FE (GB)
(72) Inventor: Gregory, Edward Joseph, Tettenhall, Wolverhampton (GB); McDonald, Thomas Joseph, Sutton Coldfield, West Midlands (GB); Medlar, Tony, Holme Hall, Chesterfield (GB); Norton, John, Frenchay, Bristol (GB); Stephen, David, Brentry, Bristol (GB); Ward, David Marshall, Lichfield, Staffordshire (GB); Wood, Paul Kalevi Clarkson, Kings Norton, Birmingham (GB)
(74) Representative: Parnham, Kevin

(57) **Abstract**

An expanded structure (3) for use in heat exchanger or component manufacture. The structure having passages or cells (8) formed by electron beam or laser welding juxtaposed sheets of material (1,2) then deforming the material between such welding (7) to created desired passage or cell configurations. Each structure being formed of several layers of suitably welded and deformed juxtaposed sheets.

## Description

The present invention relates to expanded structures and more particularly but not exclusively to structures used to form compact heat exchangers suitable for high temperature or corrosive environments.

Expanded structures have been used extensively in the past in forming aerospace components and heat exchanger cores. An expanded structure comprises two or more sheets of material suitably bonded and then deformed in order to form a structural or heat exchanger component. The materials are normally diffusion bonded together and may be creep formed, hot formed or superplastically deformed.

In aerospace components the expanded structure provides added strength and rigidity without great weight gain.

In heat exchangers, the expanded structure provides heat exchanger passages through which liquids and/or gases can flow. Several expanded structures are stacked to form the heat exchanger. Header or distribution elements are added to ensure separation of flow paths.

An efficient and compact type of heat exchanger is known to have a plate and fin construction. Such construction has several layers of parallel plates spaced by thin elements in order to define heat exchanger passages. Liquids or gases are distributed along these passages by header arrangements at each end of the heat exchanger.

There is a requirement for heat exchangers in high temperature and highly corrosive environments. Typically, these exchangers have been manufactured from stainless steel or titanium alloys. At present it is common practice to braze such alloys in order to fabricate the heat exchanger. However, use of brazing can limit the scope of application for the heat exchanger.

The problem with brazing is that it introduces dissimilar materials into the heat exchanger. In some applications these dissimilar materials cause corrosion around the braze sites. Attempts have been made to remove brazing from the fabrication procedure by use of diffusion bonding and suitable deformation.

One means of forming a heat exchanger or expanded structure by diffusion bonding techniques requires at least one plate of each layer to be screen printed with a stop off material in certain areas leaving other areas free in order to define required diffusion bonding at certain locations and areas within the heat exchanger or structure layer surface. Thus, the plates of the heat exchanger or structure are brought into intimate contact by high pressure and diffusion bonded in the areas where there is no stop off material. The diffusion bonded structure or heat exchanger layers may then be superplastically deformed to create heat exchanger passages or expanded areas. The heat exchanger or expanded structure is then formed by fabrication of several of these heat exchanger passage layers into a single assembly.

For a heat exchanger, header means are applied in order to distribute, in use, gases or liquids into and out of the heat exchanger passages. These exchanger passages facilitate mutual heat exchange between respective liquid or gas streams.

It will be appreciated that a desired objective in a heat exchanger is to arrange for as many passages per unit width as possible in order to ensure the most efficient heat exchange. An inherent problem with stop off material is that there are limitations to how accurately the stop off material can be applied to the layers and secondly there may be a degree of stop off material migration both during assembly of the layers prior to diffusion bonding and during the diffusion bonding process itself. The line bond would be thus impaired. As presently known, there is a limitation on the number of heat exchanger passages that can be fabricated per unit width with a heat exchanger produced by stop off, diffusion bonding and superplastic forming. That limitation is about 4 fins per inch for common material sheet thicknesses.

An alternative to stop off/diffusion bonding is fusion welding. However, the technique of fusion welding has its own inherent limitations with regard to minimum width and proximity of weld lines, and thus there is a limitation as to how many welds can be formed per unit width.

An obvious benefit with a heat exchanger having a high number of heat exchanger passages per unit width is that heat exchanger volume needed for given performance criteria is significantly less than an assembly having a lower number of heat exchanger pathways per unit width. Thus, significant energy savings can be made in operation of the exchanger by virtue of increased heat duty or reduced temperature difference in the same volume.

It is an objective of the present invention to provide an expanded structure suitable for use in a heat exchanger and a method of fabrication of such an expanded structure in which the problems above defined are substantially relieved. Furthermore, the present invention provides the potential for achieving 6 to 12 fins per inch, giving a significant improvement of 50 to 200% on known structures.

In accordance with a first aspect of the present invention there is provided an expanded structure for use in a heat exchanger or component manufacture formed from at least one expanded layer characterised in that each expanded layer has electron beam or laser weld lines in at least two juxtaposed sheets of deformable material and a superplastic, hot formed or creep deformed area between the weld lines to form expanded passages in the layer.

Preferably, the expanded structure is adapted for use as a heat exchanger and has header elements coupled to the expanded passages to distribute liquid or gas to and from the expanded passages.

Preferably, the weld lines are parallel to one another.

Preferably, the expanded layers are grouped together by diffusion bonding.

Preferably, the expanded structure is fabricated from the steel SAF 2304.

Preferably, there are structure plates between expanded layers in the expanded structure.

In accordance with a second aspect of the present invention there is provided a method of fabricating an expanded structure comprising;
a. arranging at least two sheets of deformable material in juxtaposed position;
b. either electron beam or laser welding the sheets to form weld lines therebetween;
c. fabricating by creep or superplastic deformation or hot forming the sheets between the weld lines to create an expanded passage layer having fins;
d. stacking several expanded passage layers and securing them together to form an expanded structure.

Preferably, the expanded structure is part of a heat exchanger with header means to distribute two liquids or gases in respective heat exchanger passage networks formed from the expanded passage layers.

Preferably, the expanded layers are fabricated to have several pairs of sheets of deformable material are welded and fabricated to form in one step structure bundles.

Preferably, structure bundles are secured together by diffusion bonding.

Preferably, the expanded structure is formed from SAF 2304 steel.

An embodiment of the present invention will now be described by way of example only with reference to the accompanying drawings in which:
Figure 1 illustrates two sheets of deformable material;
Figure 2 illustrates the two sheets of deformable material illustrated in Figure 1 welded together in accordance with the present invention;
Figure 3 illustrates said welded deformable sheets illustrated in Figure 2 when deformed either by superplastic deformation, hot forming or creep to define expanded passages;
Figure 4 illustrates in schematic form a section of the expanded passage layer illustrated in Figure 3;
Figure 5 illustrates in schematic block form an expanded configuration incorporating heat exchanger passage layers as illustrated in Figure 3;
Figure 6 illustrates in schematic plan view a pattern of fins at the entry part of a heat exchanger expanded passage layer which provides means of distributing fluid from one fin opening into two or more fin spacings;
Figure 7 illustrates in schematic plan view an expanded passage layer having a flared distribution area;
Figure 8 illustrates in schematic plan view an expanded passage layer arranged to have a flared distribution area which may co-operate with the expanded passage layer illustrated in Figure 7 to provide a heat exchanger structure;
Figure 9 is a schematic part plan of a distribution pattern for a heat exchanger; and,
Figure 10 is a schematic part plan of a distribution pattern for a heat exchanger which may co-operate with the distribution pattern illustrated in Figure 9.

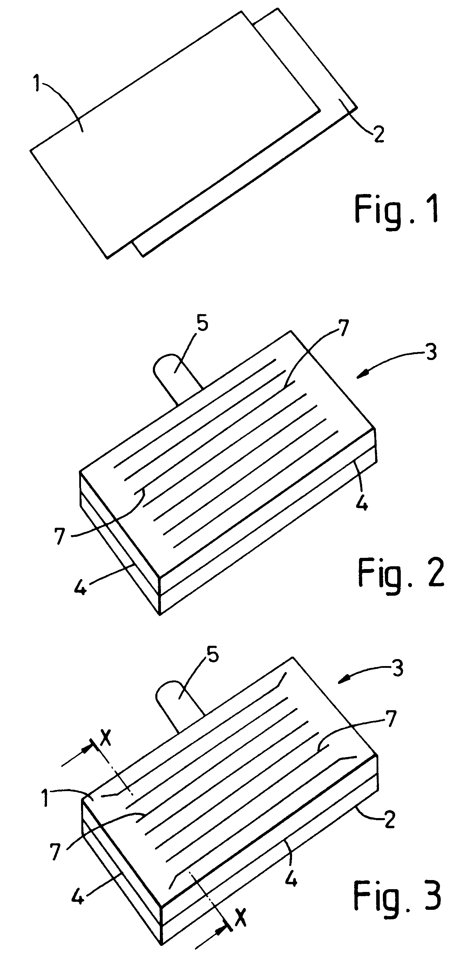

Referring to Figure 1 two sheets of deformable material 1, 2 are brought into a juxtaposed relationship. Examples of materials that can be used are titanium alloy 6 Al 4V and stainless steel AVESTA SAF 2304, but non-superplastic materials such as austenitic stainless steels may be used where desired fin shapes can be achieved by creep and conventional hot forming.

SAF 2304 is a preferred duplex stainless steel because like other steels of similar comparison it has a low propensity to form sigma phase at the deformation and bonding temperature employed. Super duplex steels, such as zeren 100, could be used by employing much higher temperatures to avoid sigma formation.

Prior to line welding the sheets are degreased, flashpickled, aligned. The sheets to be line welded must be held in close proximity otherwise the weld cannot be sustained. In one method the sheet edges are welded 4 together and evacuated to bring them into close proximity before line welding in a picture frame clamping jig. Alternatively, the sheets could be clamped and brought into close proximity and line welded then the sheets are edge welded. It is essential that the welds are aligned for example using CNC technology in order to ensure consistency in the later deforming phase. By computer numerically controlled (CNC) machinery it is possible also to produce sine wave, segmental wave or any pattern to improve heat transfer. It will be appreciated that the weld geometry is to a large extent defined by conventional welding parameters. Thus, electron beam welding can provide more closely pitched welds than laser welding.

A further feature that must be considered is that a weld crater is created at the end of each weld line. Such craters are eliminated by use of a mechanised slope-out welding technique. This enables greater design flexibility.

Figure 2 illustrates an expanded passage layer 3 having sheets 1, 2. The layer 3 also has an inflation tube 5 and a series of parallel weld lines 7. These weld lines 7 are produced either by laser welding or electron beam welding.

It will be appreciated a significant problem with providing weld lines 7 in the expanded passage layer 3 is that distortion is created by the welding procedure. Both laser and electron beam welding provide varying degrees of distortion. Solutions to such weld distortion problems may be found in one or a combination of the following:-
1. Weld the weld line 7 in an opposing sequence whereby adjacent weld lines 7 are welded with opposite path directions;
2. Weld half of the weld lines 7 on one side of the layer 3 and the other half of the weld lines 7 on the other side, each weld start being from the same position;
3. Provide weld lines on opposite sides of the layer 3 as indicated with regard to 2 above but alternate both weld start and direction between each side of the layer 3;
4. Provide stress and strain relief in layer 3 after welding in a jig in a heat treatment furnace or between heated plates;
5. Provide a jig assembly arranged to localise access to each weld position and thus reduce stress within the layer 3;
6. Provide welding of the layer 3 using pre-heated sheets 1, 2 maintained at an elevated temperature to eliminate stress creation due to welding.
7. Provide a flattening load in the blowing die during the heat-up phase prior to superplastic or hot forming.

As indicated above it is an objective of the present invention to provide relatively higher fin densities per unit width than previously achieved. It will be understood that the fin density is highly dependent upon thickness of the material chosen in association with welding technique. With stop off and diffusion bonding as previously described there is generally a limit of 4 fins per inch with material thicknesses necessary for common pressure performance requirements. The use of laser welding or electron beam welding allows densities of 6 - 12 fins per inch with the necessary material thicknesses for pressure performance.

It will be understood that expanded passage layers 3 can be readily created. However, it would be more commercially viable to provide modules or bundles of several expanded passage layers 3 in one fabrication step. This bundle of layers 3 would be arranged to have passages perpendicular to each other in adjacent layers 3. Furthermore, individual layers 3 can be created and then assembled into bundles or secured together prior to deformation described below.

Modules or bundles of expanded passage layers 3 can be fabricated by aligning several pairs of sheets of deformable material. These pairs are then welding and deformed as indicated previously. Care must be taken that the weld profile, whether it be electron beam or laser, has a reasonably good consistency between pairs. Thus, typically only three pairs or six sheets of material are weld at the same time. During the deformation phase or at some other period in the fabrication procedure the pairs become diffusion bonded together. Once welded together the layers are simultaneously deformed to create the expanded passages.

The modules or bundles of expanded passage layers 3 can be considered "building blocks" to create larger expanded structures. Such structures being formed by diffusion bonding modules or bundles together.

Expanded passage layers 3 can be deformed singularly and then diffusion bonded to secure these single layers together. Alternatively, several or multiple expanded passage layers could be formed in one deformation step. Thus, three sets of expanded passages could be formed at once in three levels of an expanded passage layer. The sets of expanded passages being held together by diffusion bonds between the fins. The diffusion bonding could take place at the same time as the deformation procedure.

It will be understood that there is a significant advantage with fabrication of expanded structures and, in particular, heat exchangers from single or from relatively small multiple bundles of expanded passage layers, in that these singles or bundles can be individually tested and inspected prior to final expanded structure or heat exchanger construction. Thus, defective singles or bundles can be repaired or eliminated before incorporation in the expanded structure. It is possible that large numbers of expanded passage layers may be held together by welded side bars and gasket interfaces or clamps rather than through diffusion bonding.

Figure 3 illustrates the layer 3 shown in figure 2 after superplastic or creep deformation. Isostatic argon pressure is presented through inflation tube 5 which causes deformation between weld lines 7 to create expanded passages.

The actual deformation procedure is highly dependent upon the ratio of weld pitch to sheet thickness. However, it has been found with titanium 6A14V that preparation for creep and conventional hot deformation or superplastic deformation can be achieved by plastic flexing or cracking the area between weld lines 7 at a temperature of 450-700°C for 1-13 hours and at a pressure up to 600 psi (typically 9 hours at 650°C and 300 psi). It may be beneficial to have a machined groove (or etched groove) in the sheet between the welds to aid initial opening of the passages. Actual deformation is conducted at a temperature of, for example, 800 to 950°C in a similar pressure range, (typically 300 psi at 925°C).

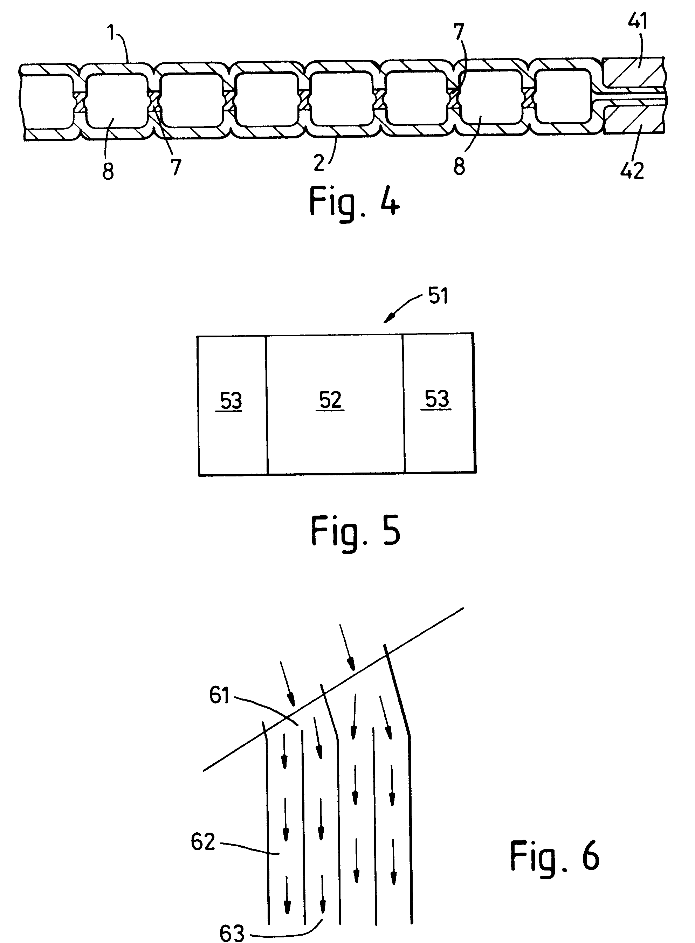

Figure 4 illustrates a section of expanded passage layer 3 in the direction XX (Figure 3). It will be understood that a primary requirement for expanded passages, especially in heat exchangers is a reasonably high degree of passage cross-section consistency and uniformity. Thus, each expanded passage cell 8 has substantially the same cross-sectional area. Furthermore, the cells 8 are typically square in shape. However, it is possible to have a high height-to-width ratio and certainly greater than the 1:1 ratio previously achievable. It will also be noted that the thickness of passage cell 8 wall about the weld line 7 can be greater than that at the top of the cell 8. This is a typical post-form characteristic of the process of superplastic deformation. A limitation on cell 8 height is thus prescribed by the necessity of having a sufficient wall thickness to achieve adequate pressure performance at the cell top and corners. The cells 8 have a flat top surface due to the effect of a containment tool (not shown).

It will be seen that the sheets 1, 2 are secured about their edge by side or edge bars 41, 42 (not shown in previous figures). These side or edge bars 41, 42 seal the sheet edges and can be diffusion bonded to the sheets 1, 2. The side bars 41, 42 provide a degree of containment as the sheets 1, 2 are deformed and help reduce the distortion effects of the line weld procedure.

As indicated previously, it is desirable to produce bundles or modules of heat exchanger passage layers 3 in order to provide a more economic fabrication procedure. Thus, a combination of three expanded passage layers 3, two with transverse passages and one with longitudinal passages may be brought into association with a thin layer of common titanium alloy between the layers 3. The assembly is then diffusion bonded together using well-known conditions at a temperature of 925°C and by applying an internal gas pressure of 400 psi to all 3 layers for 2 hours.

Similar results to titanium alloy described above can be achieved with sheets of stainless steel SAF 2304 at a plastic deformation temperature in the range 800-1050°C (typically 980°C and a flex pressure of up to 600 psi, eg 70 psi). Diffusion bonding requirements are also known: typical conditions being 2 hours at a temperature of 980°C and an inflation pressure of 400 psi. However, as previously described the actual deformation temperature and pressure used are dependent on the ratio of weld pitch to sheet thickness.

In order to fabricate a heat exchanger, the expanded passage layers 3 are cut after stacking and bonding through an entry zone, that is to say the cell 8 adjacent an edge, in order to expose the passages 8. The cut may be lateral or longitudinal with respect to the cell or passage. The layers 3 or bundles of layers as indicated previously are stacked and bundled together in an appropriate manner to create at least two flow paths. The heat exchanger may comprise a hundred or more layers of expanded (heat exchange) passage layers 3. Once these stacked layers 3 are joined together in an appropriate manner and integrity established by containment of the forming pressure, header means 11 are attached to the entry zone in order to distribute, in operation, liquid or gas through the flow paths of the heat exchanger. The header means ensures at least two distinct passage networks through the heat exchanger stack are maintained and that two respective gas or liquid flows do not (unless required) mix. The heat exchange stack may be diffusion bonded together or held together by other means such as mechanical straps.

It will be appreciated that a heat exchanger in accordance with the present invention could be fabricated from any suitable sheets of superplastic or creep or hot deformable material that can be welded in an appropriate way. Thus, some titanium alloys, some stainless steels and possibly some plastics materials that can be deformed can be used provided these materials achieve appropriate performance criteria for the eventual heat exchanger. Steels with a low molybdenum content might be useful.

Typically, a heat exchanger in accordance with the present invention will have dimensions of 80 inches by 24 inches by 24 inches.

Figure 5 illustrates schematically a heat exchanger assembly 51 with header/distribution elements 53 and a heat exchanger area 52. Fluids and/or gases are fed through the header elements 53 to the exchanger area 52. The fluids and/or gases exchange heat energy within the area 52 and may condense or vaporize before exit from the assembly 51 through the elements 53.

Figure 6 illustrates schematically a passage pattern at entry to the heat exchanger area 52 of the assembly 51 (Figure 5). It will be appreciated that a fluid or gas flow (arrowhead) is split from the distributor 61 to two channels 62, 63. Thus, the area for heat exchange is increased. It is also possible to provide distribution from one distributor to two, three of four exchanger channels or passages.

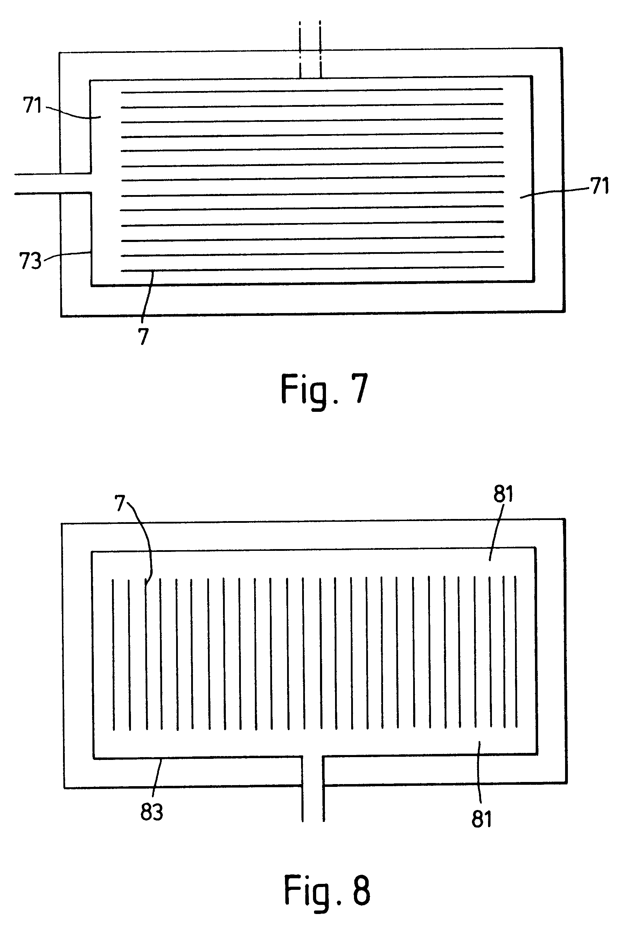

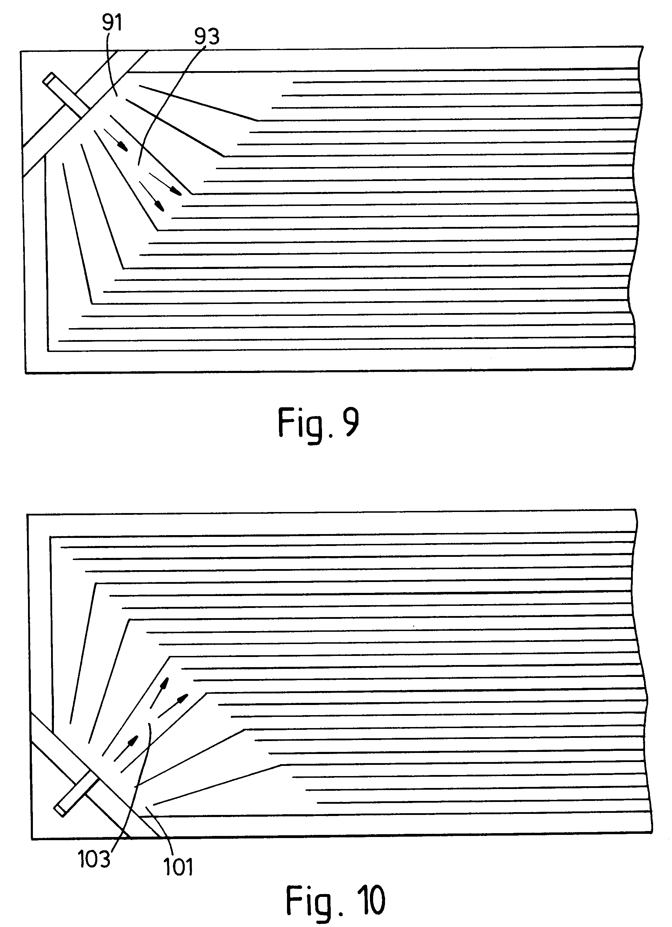

Figures 7 to 10 illustrate passage arrangements for heat exchangers including deformed structures in accordance with the present invention. Figures 7 and 8 illustrate simple passage arrangements whilst Figures 9 and 10 have diagonal passages. Consider Figures 7 and 8. Entry zone 71 (Figure 7) or 81 (Figure 8) are provided to allow coupling to header elements when the heat exchanger is fabricated. The entry zones 71, 81 are formed by leaving a gap between an edge bar 73 (Figure 7) or 83 (Figure 8) and the line welds 7. Thus, when the passage layer is deformed the sheets 1, 2 as indicated previously are unrestrained in this gap area and so the sheets balloon. During heat exchanger fabrication the edge bar 73, 83 is removed and the flared entry zones 71, 81 exposed. Such a flared entry zone 71, 81 allows good input and outlet of liquids or gases to the passages of the layer. Furthermore, flared entry zones 71, 81 allow easier coupling to header elements.

It will be appreciated that a heat exchanger stack having the passage arrangements illustrated in Figure 7 and 8 in alternate expanded passage layers could be fabricated.

Figure 9 and 10 illustrate passage arrangements having corner entry zones 91 (Figure 9) and 101 (Figure 10). Thus, it is possible to locate header means at one end of the stack of expanded layers. Furthermore, a relatively high degree of passage expansion and multiple passage distribution can be incorporated into the entry zone 91, 101. Such expansion and distribution may facilitate heat exchanger. It will be seen that liquid flowing in accordance with the arrowheads expands in a first part 93, 103 of the passage arrangement. This expanded flow then enters three passages. Thus, the surface area for thermal exchange is greatly increased.

It will be appreciated that a heat exchanger stack could be constructed of alternate layers of passage arrangements illustrated in Figures 9 and 10.

## Claims

**(1)** An expanded structure for use in a heat exchanger or component manufacture formed from at least one expanded layer characterised in that each expanded layer has electron beam or laser weld lines in at least two juxtaposed sheets of deformable material and a superplastic, hot formed or creep deformed area between the weld lines to form expanded passages in the layer.

**(2)** An expanded structure as claimed in claim 1 wherein the structure has header elements coupled to the expanded passages to distribute liquid or gas to and from the expanded passages and allow the structure to operate as a heat exchanger.

**(3)** An expanded structure as claimed in claim 1 or 2 wherein the weld lines are parallel to one another.

**(4)** An expanded structure as claimed in claim 1, 2 or 3 wherein the expanded layers are grouped together by diffusion bonding.

**(5)** An expanded structure as claimed in any proceeding claim wherein there are structure plates between expanded layers in the expanded structure.

**(6)** A method of fabricating an expanded structure comprising;
a. arranging at least two sheets of deformable material in juxtaposed position;
b. either electron beam or laser welding the sheets to form weld lines therebetween;
c. fabricating by creep or superplastic deformation or hot forming the sheets between the weld lines to create an expanded passage layer having fins;
d. stacking several expanded passage layers and securing them together to form an expanded structure.

**(7)** A method as claimed in claim 6 wherein once the expanded passage layers are secured together then header means are added to the expanded structure in order to allow the structure to act as a heat exchanger by distribution of liquids or gases in respective heat exchanger passage networks formed from the expanded passage layers.

**(8)** A method as claimed in claim 6 or 7 wherein several pairs of sheets of deformable material are welded and fabricated together in one step to form structure bundles which are then secured together to produce the expanded structure.

**(9)** A method as claimed in claim 6, 7 or 8 wherein the expanded passage layers are secured together by diffusion bonding.
